## Europäisches Patentamt
## European Patent Office
## Office européen des brevets

(11) Publication number: **0 067 712**
**B1**

# EUROPEAN PATENT SPECIFICATION

(45) Date of publication of patent specification: **23.01.85**

(21) Application number: **82303105.9**

(22) Date of filing: **15.06.82**

(51) Int. Cl.⁴: **A 01 N 43/40** // (A01N43/40, 37/40)

(54) A herbicidal composition and method for controlling the growth of plants.

(30) Priority: **15.06.81 GB 8118322**

(43) Date of publication of application:
**22.12.82 Bulletin 82/51**

(45) Publication of the grant of the patent:
**23.01.85 Bulletin 85/04**

(84) Designated Contracting States:
**BE CH DE FR IT LI SE**

(56) References cited:
**US-A-4 110 104**

**C.R. WORTHING: "The pesticide manual", 6th edition, 1979, B.C.P.C. publications, Croydon (GB)**

(73) Proprietor: **THE DOW CHEMICAL COMPANY Dow Center 2030 Abbott Road Post Office Box 1967 Midland Michigan 48640 (US)**

(72) Inventor: **Brown, John Graham, 7, Allée de l'Alkanal Homeau de Fontmerle Dom. des Hauts de Vougrenier F-06270 Villeneuve-Loubet (FR)**

(74) Representative: **Allard, Susan Joyce et al BOULT, WADE & TENNANT 27 Furnival Street London EC4A 1PQ (GB)**

Courier Press, Leamington Spa, England.

**0 067 712**

**Description**

The present invention relates to herbicidal compositions and to methods for the control of weeds.

Both 4-amino-3,5-dichloro-6-fluoro-2-pyridinyloxyacetic acid and 3,5-dichloro-4-hydroxybenzonitrile (bromoxynil) are known herbicides which may be used in the free form, or in the form of salts or esters thereof.

These compounds are disclosed in U.S.—A—4110104 and The Pesticide Manual, 6th Edition, 1979, B.C.P.C. publications, Croydon (GB) by C. R. Worthing, at page 55, respectively.

Hereinafter the term "derivatives" will be used to designate the esters or salts of the above-mentioned herbicides.

Salt and ester derivatives included herein are those which are commonly used. For example, salts include the alkali metal salts such as the sodium or potassium salts and salts with amines, such as ethanolamine. Esters that may be employed include alkyl esters $(C_{1-12})$ phenylalkyl $(C_{7-10})$ and alkoxyalkyl $(C_{2-12})$.

It has now been found that a combination of 4-amino-3,5-dichloro-6-fluoro-2-pyridinyloxyacetic acid and 3,5-dibromo-4-hydroxybenzonitrile, or salts or esters thereof, in certain proportions have unexpected properties in the control of broad-leafed weeds. The degree of control constitutes a synergistic effect.

According to the present invention there is provided a herbicidal composition which comprises a synergistic mixture of active ingredients (A) and (B); ingredient (A) being 4-amino-3,5-dichloro-6-fluoro-2-pyridinyloxyacetic acid or a salt or ester thereof (as hereinbefore defined) and ingredient (B) being 3,5-dibromo-4-hydroxybenzonitrile or a salt or ester thereof (as hereinbefore defined).

Ingredient A is preferably in the form of the 1-methylheptyl ester while B is preferably in the form of the octanoate ester.

Whether or not a particular mixture of active ingredients A and B is a synergistic mixture in accordance with this invention may be determined by the following test:

Three separately growing samples of *Veronica persica* (Buxbaum speedwell) at the 4 to 10 leaf growth stage are sprayed, one with p g/ha of 4-amino-3,5-dichloro-6-fluoro-2-pyridinyloxyacetic acid, or a salt or ester thereof, another with q g/ha of 3,5-dibromo-4-hydroxybenzonitrile, or a salt or ester thereof, and the third with the mixture under test to give a dose rate of p g/ha of A and q g/ha of B.

After a period of 28 days if the plants are grown in a green house or six to twelve weeks if grown in the field, the plants are inspected to determine what inhibition of growth has occurred.

The results are treated in a manner shown in the article "Calculating Synergistic and Antagonistic Responses of Herbicide Combinations" by S. R. Colby (Weeds 1967 *50* p. 20—22).

By this method an expected result E for the use of the mixture is calculated and compared with the observed result.

If X=percent inhibition of growth with herbicide (a) at p g/ha.

and Y=percent inhibition of growth with herbicide (b) at q g/ha

then E=expected percent inhibition of growth with herbicides (a)+(b) at p+q g/ha is equal to $X+Y-XY/100$.

If the observed inhibition of growth (O) is 10% or more greater than the calculated expected figure E, $(100\times(O-E)/E \geqslant 10)$ then the mixture is synergistic as the term is used in this specification.

In general, a synergistic effect is observed with compositions which contain A and B in a weight ratio of from 1:10 to 4:1, preferably from 1:5 to 2:1.

The compositions of the present invention are particularly valuable for the selective control of weeds, particularly broad-leafed weeds, in cereal crops, such as wheat and in barley and in graminaceous crops generally. Since the compositions are selective, a co-potentiating or synergistic effect is not observed with respect to all kinds of plants.

The compositions of the present invention have been found to be suitable for use in the general post-emergent control of weeds or other unwanted vegetation. For such uses, compositions of the unmodified combinations of active ingredients of the present invention can be employed. However, the present invention embraces the use of the combinations of active ingredients with an inert carrier or a material known in the art as an adjuvant in solid or liquid form. Thus, for example, the active ingredients can be disposed on a finely divided solid and employed therein as a dust. The active ingredients, or a solid composition comprising the active ingredients may be dispersed in a suitable solvent, typically with the aid of a wetting agent, and the resulting suspension employed as a spray.

Preferably the compositions of the present invention are employed in the form of wettable powders or emulsifiable concentrates.

The concentration of the active ingredients in the compositions of the present invention is generally within the range of from 0.0001 to 95 percent by weight. In compositions to be employed as concentrates, the active ingredients are usually present in a concentration of from 1 to 80 percent by weight. The compositions may also contain other conventional additives, such as fertilizers, phytotoxicants, plant growth regulants, or pesticides.

This invention also provides a method for controlling plant growth which comprises applying to plants or to soil a composition as defined hereinbefore.

2

**0 067 712**

The rate of application providing the required degree of control will depend on the type of plant, stage of growth of plants and/or climatic conditions.

Usually the composition is applied to provide from 50 g/ha to 200 g/ha of active ingredient (A) and from 50 g/ha to 500 g/ha of active ingredient (B).

The preferred rate of application being from 75 g/ha to 200 g/ha of active ingredient (A) and from 100 g/ha to 375 g/ha of active ingredient (B).

A further embodiment of this invention provides a method for controlling plant growth which method comprises bringing together on the plants or soil 4-amino-3,5-dichloro-6-fluoro-2-pyridinyl-oxyacetic acid or a salt or ester thereof, and 3,5-dibromo-4-hydroxybenzonitrile, or a salt or ester thereof, in proportions to form a synergistic mixture as hereinbefore defined.

The compositions of the present invention have been found suitable for post-emergent control of broad-leafed weeds in particular *Veronica persica* (Buxbaum-Speedwell), *Stellaria media*, (Chickweed), *Viola arvensis* (pansy), *Polygonum lapathifolium* (pale persicaria), *Polygonum persicaria* (red shank), *Polygonum aviculare* (knot grass), *Polygonum convolvulus* (black bindweed), *Chenopodium album* (fat hen), *Galium aparine* (cleavers), *Myosotis arvensis* (forget-me-not) and *Lamium purpureum* (red deadnettle).

The following Examples further illustrate the present invention.

Example 1

A field trial was carried out in which a plot infested with *Veronica persica* at the young plant stage was divided into rectangular areas which were sprayed at various application rates with aqueous solutions of (A) 4-amino-3,5-dichloro-6-fluoro-2-pyridinyloxyacetic acid and/or (B) 3,5-dibromo-4-hydroxybenzonitrile; (A) being present as the 1-methylheptyl ester and (B) as the octanoate ester. The degree of weed control was assessed 48 days after spraying.

Application rates of compound (A) of 200 g/ha and below gave a poor control of *Veronica persica*. The same effect was obtained with compound (B) at application rates of 500 g/ha and below. However application of a solution containing both compounds at application rates of 100—200 g/ha for compound (A) and 100—500 g for compound (B) gave complete kill of *Veronica persica*.

Example 1

Control of *Veronica persica* (Buxbaum-Speedwell) in spring barley in 1 field trial.

| Treatment | Rate/ha | Observed % control | Expected % control |
|---|---|---|---|
| Compound A | 100 | 23 | |
| | 150 | 20 | |
| | 200 | 53 | |
| Compound B | 100 | 42 | |
| | 200 | 38 | |
| | 300 | 45 | |
| | 400 | 63 | |
| | 500 | 65 | |
| Compound A+B | 100+300 | 100 | 58 |
| | 100+400 | 100 | 71 |
| | 100+500 | 100 | 73 |
| | 150+300 | 100 | 56 |
| | 150+400 | 100 | 70 |
| | 150+500 | 100 | 72 |
| | 200+100 | 100 | 64 |
| | 200+200 | 100 | 62 |
| | 200+300 | 100 | 66 |

Example 2

Two field trials were carried out in which plots infested with *Polygonum aviculare* at the young plant stage were divided into rectangular areas which were sprayed at various application rates with aqueous solutions of (A) and or (B), the compounds being present in solution as the 1-methylheptyl ester for (A) and the octanoate ester for (B). The degree of weed control was assessed 51 days after spraying.

Application rates of compound (A) of 250 g/ha and below gave a poor control of *Polygonum aviculare*. The same effect was obtained with compound (B) at application rates of 500 g/ha and below.

3

However application of a solution containing both compounds at application rates of 75 g/ha for compound (A) and 300 g/ha for compound (B) gave complete kill of all *Polygonum aviculare* plants present. Other combinations of compounds (A) and (B) also gave excellent weed control as demonstrated in this example.

Example 2

Control of *Polygonum aviculare* in spring barley in 2 field trials

| Treatment | Rate/ha | Mean % control | |
|---|---|---|---|
| | | Observed | Expected |
| Compound A | 75 | 40 | |
| | 100 | 46 | |
| | 150 | 53 | |
| | 200 | 42 | |
| | 250 | 53 | |
| Compound B | 200 | 38 | |
| | 300 | 42 | |
| | 400 | 40 | |
| | 500 | 40 | |
| Compound A+B | 75+300 | 100 | 67 |
| | 75+400 | 100 | 64 |
| | 75+500 | 100 | 64 |
| | 100+200 | 100 | 66 |
| | 100+300 | 100 | 69 |
| | 100+400 | 85 | 68 |
| | 100+500 | 100 | 68 |
| | 150+300 | 100 | 73 |
| | 150+400 | 100 | 71 |
| | 150+500 | 100 | 72 |
| | 200+300 | 95 | 66 |
| | 200+400 | 95 | 65 |
| | 200+500 | 100 | 65 |
| | 250+500 | 100 | 71 |
| | 250+500 | 100 | 71 |

Example 3

A formulation was prepared containing the following ingredients:

| | g/litre |
|---|---|
| Acetic acid, (4-amino-3,5-dichloro-6-fluoro-2-pyridinyloxy), 1-methylheptyl ester | 288 |
| 3,5-dibromo-4-hydroxybenzonitrile octanoate ester | 524 |
| Solvesso 100 | 158 |
| Tensiofix 7938 | 25 |
| Tensiofix 7953 | 25 |

The formulation was used at an application rate of 2.0 l per hectare, after dilution with water to 200 l, to control weeds in cereal crops. Crop areas of spring barley, spring wheat, winter barley and winter wheat were sprayed overall at growth stages between the 5 leaf stage and commencement of jointing. An excellent control of broad leaved weeds including *Polygonum aviculare, Veronica persica, Galium aparine, Stellaria media, Myosotis arvensis, Polygonum convolvulus* and *Lamium purpureum*.

**Claims**

1. A herbicidal composition which comprises a synergistic mixture of active ingredients (A) and (B); ingredient (A) being 4-amino-3,5-dichloro-6-fluoro-2-pyridinyloxyacetic acid or a salt or ester thereof and ingredient (B) being 3,5-dibromo-4-hydroxybenzonitrile or a salt or ester thereof.

2. A composition as claimed in claim 1 wherein ingredient (A) is in the form of the 1-methylheptyl ester.

3. A composition as claimed in claim 1 or claim 2 wherein ingredient (B) is in the form of the octanoate ester.

4. A composition as claimed in any one of the preceding claims wherein the active ingredients (A) and (B) are present in a weight ratio of from 1:10 to 4:1.

5. A composition as claimed in claim 4 wherein the active ingredients (A) and (B) are present in a weight ratio of from 1:5 to 2:1.

6. A composition as claimed in any one of the preceding claims which is in the form of a wettable powder.

7. A composition as claimed in any one of claims 1 to 5 which is in the form of an emulsifiable concentrate.

8. A method for controlling the growth of plants which comprises applying to the plants or to the soil a composition as claimed in any one of claims 1 to 7.

9. A method as claimed in claim 8 wherein the composition is applied at a rate to provide from 50 g/ha to 200 g/ha of active ingredient (A) and from 50 g/ha to 500 g/ha of active ingredient (B).

10. A method as claimed in claim 9 wherein the composition is applied at a rate to provide from 75 g/ha to 200 g/ha of active ingredient (A) and from 100 g/ha to 375 g/ha of active ingredient (B).

11. A method for controlling the growth of plants which comprises bringing together on the plants or soil (A) 4-amino-3,5-dichloro-6-fluoro-2-pyridinyloxyacetic acid or a salt or ester thereof and (B) 3,5-dibromo-4-hydroxybenzonitrile or a salt or ester thereof to form a synergistic mixture.

12. A method as claimed in any one of claims 8 to 10 wherein the plant whose growth is controlled is a Broad Leafed weed.

13. A method as claimed in any one of claims 8 to 12 wherein the plant whose growth is controlled is present amongst cereal plants.

**Patentansprüche**

1. Herbizide Zusammensetzung enthaltend eine synergistische Mischung aus aktiven Bestandteilen (A) und (B), wobei Bestandteil (A) 4-Amino-3,5-dichlor-6-fluor-2-pyridinyloxyessigsäure oder ein Salz oder Ester davon ist, und Bestandteil (B) 3,5-Dibrom-4-hydroxybenzonitril oder ein Salz oder Ester davon ist.

2. Zusammensetzung nach Anspruch 1, dadurch gekennzeichnet, daß Bestandteil (A) in der Form des 1-Methylheptylesters vorliegt.

3. Zusammensetzung nach Anspruch 1 oder 2, dadurch gekennzeichnet, daß Bestandteil (B) in der Form des Octansäureesters vorliegt.

4. Zusammensetzung nach einem der vorhergehenden Ansprüche, dadurch gekennzeichnet, daß die aktiven Bestandteile (A) und (B) im Gewichtsverhältnis von 1:10 bis 4:1 vorliegen.

5. Zusammensetzung nach Anspruch 4, dadurch gekennzeichnet, daß die aktiven Bestandteile (A) und (B) im Gewichtsverhältnis von 1:5 bis 2:1 vorliegen.

6. Zusammensetzung nach einem der vorhergehenden Ansprüche, dadurch gekennzeichnet, daß sie in der Form eines benetzbaren Pulvers vorliegt.

7. Zusammensetzung nach einem der Ansprüche 1 bis 5, dadurch gekennzeichnet, daß sie in der Form eines emulgierbaren Konzentrats vorliegt.

8. Verfahren zur Kontrolle des Wachstums von Pflanzen, dadurch gekennzeichnet, daß man auf die Pflanzen oder den Boden eine Zusammensetzung nach einem der Ansprüche 1 bis 7 appliziert.

9. Verfahren nach Anspruch 8, dadurch gekennzeichnet, daß die Zusammensetzung in einer Menge appliziert wird, die 50 g/ha bis 200 g/ha des aktiven Bestandteils (A) und 50 g/ha bis 500 g/ha des aktiven Bestandteils (B) bereitstellt.

10. Verfahren nach Anspruch 9, dadurch gekennzeichnet, daß die Zusammensetzung in einer Menge appliziert wird, die 75 g/ha bis 200 g/ha des aktiven Bestandteils (A) und 100 g/ha bis 375 g/ha des aktiven Bestandteils (B) bereitstellt.

11. Verfahren zur Kontrolle des Wachstums von Pflanzen, dadurch gekennzeichnet, daß man auf den Pflanzen oder dem Boden (A) 4-Amino-3,5-dichlor-6-fluor-2-pyridinyloxyessigsäure oder ein Salz oder einen Ester davon und (B) 3,5-Dibrom-5-hydroxybenzonitril oder ein Salz oder Ester davon zur Bildung einer synergistischen Mischung zusammenbringt.

12. Verfahren nach einem der Ansprüche 8 bis 10, dadurch gekennzeichnet, daß die Pflanze, deren Wachstum kontrolliert werden soll, ein breitblättriges Unkraut ist.

13. Verfahren nach einem der Ansprüche 8 bis 12, dadurch gekennzeichnet, daß die Pflanze, deren Wachstum kontrolliert werden soll, zwischen Getriedepflanzen vorhanden ist.

**Revendications**

1. Composition herbicide comprenant un mélange synergique de substances actives (A) et (B), la substance (A) étant l'acide amino-4-dichloro-3,5-fluoro-6-pyridinyloxy-2-acétique ou un de ses sels ou de ses esters et la substance (B) étant le dibromo-3,5-hydroxy-4-benzonitrile ou un de ses sels ou de ses esters.

2. Composition selon la revendication 1, dans laquelle la substance (A) se présente sous forme de l'ester méthyl-1-heptylique.

3. Composition selon la revendication 1 ou la revendication 2, dans laquelle la substance (B) se présente sous forme de l'ester octanoate.

4. Composition selon l'une quelconque des revendications précédentes, dans laquelle les substances actives (A) et (B) sont présentes en un rapport pondéral compris entre 1:10 et 4:1.

5. Composition selon la revendication 4, dans laquelle les substances actives (A) et (B) sont présentes en un rapport pondéral compris entre 1:5 et 2:1.

6. Composition selon l'une quelconque des revendications précédentes, qui se présente sous forme d'une poudre mouillable.

7. Composition selon l'une quelconque des revendications 1 à 5, qui se présente sous forme d'un concentré émulsifiable.

8. Procédé pour contrôler la croissance des plantes, consistant à appliquer aux plantes ou au sol une composition selon l'une quelconque des revendications 1 à 7.

9. Procédé selon la revendication 8, dans lequel on applique la composition à raison de 50 g/ha à 200 g/ha de substance active (A) et de 50 g/ha à 500 g/ha de substance active (B).

10. Procédé selon la revendication 9, dans lequel on applique la composition à raison de 75 g/ha à 200 g/ha de substance active (A) et de 100 g/ha à 375 g/ha de substance active (B).

11. Procédé pour contrôler la croissance des plantes consistant à amener ensemble sur les plantes ou le sol (A) de l'acide amino-4-dichloro-3,5-fluoro-6-pyridinyloxy-2-acétique ou un de ses sels ou de ses esters et (B) du dibromo-3,5-hydroxy-4-benzonitrile ou un de ses sels ou de ses esters pour former un mélange synergique.

12. Procédé selon l'une quelconque des revendications 8 à 10, dans lequel la plante dont la croissance est contrôlé est une mauvaise herbe latifoliée.

13. Procédé selon l'une quelconque des revendications 8 à 12, dans lequel la plante dont la croissance est contrôlée est présente parmi les plantes céréales.